# EUROPEAN PATENT SPECIFICATION

(11) **EP 4 381 696 B1**
(45) Date of publication and mention of the grant of the patent: **26.02.2025**
(21) Application number: 22840196.4
(22) Date of filing: 22.12.2022
(51) Int. Cl.: H04L 12/28, H04L 41/084, H04W 88/04

(54) **METHOD AND SYSTEM FOR ACTIVATING AUXILIARY ACCESS POINTS IN HOME COMMUNICATION NETWORKS**
VERFAHREN UND SYSTEM ZUR AKTIVIERUNG VON HILFSZUGANGSPUNKTEN IN HEIMKOMMUNIKATIONSNETZEN
PROCÉDÉ ET SYSTÈME D'ACTIVATION DE POINTS D'ACCÈS AUXILIAIRES DANS DES RÉSEAUX DE COMMUNICATION DOMESTIQUE

(30) Priority: 04.02.2022 ES 202230083
(43) Date of publication of application: 12.06.2024
(73) Proprietor: XFERA MOVILES, S.A.U., 28108 Alcobendas Madrid (ES)
(72) Inventor: PALMAR ARENAS, Rafael, 28108 ALCOBENDAS (MADRID) (ES)
(74) Representative: Temiño Ceniceros, Ignacio
(86) International application number: PCT/EP2022/087459
(87) International publication number: WO 2023/147933

(56) References cited:
- EP-A1- 2 563 087
- CN-A- 110 460 995
- US-A1- 2014 250 513
- US-A1- 2017 150 362
- US-A1- 2022 039 176

## Description

### FIELD OF THE INVENTION

The present invention is comprised in the field of telecommunications, mobile telephony, and generally network information exchange technologies. More specifically, the invention relates to a method and system for activating an auxiliary access point (AP) in a home communication network managed by a telecommunications operator.

### BACKGROUND OF THE INVENTION

The Internet connectivity of various electronic devices is a common feature of domestic spaces today. Typically, the Internet access of said devices, such as televisions, mobile telephones, computers, video game consoles, printers, lighting devices, voice assistants, video surveillance cameras, home appliances, etc., involves connection to a fixed Internet connection network through a router, either by means of a network cable or, alternatively, by such router being configured as an AP to a wireless network, usually a Wi-Fi-type network. As a result of this connection, the different devices making up the home network are capable of communicating with one another, as well as with other external elements, through the Internet.

Home consumers usually hire services for managing their Internet access networks from telecommunications operators, which ensure a suitable transmission and reception of information with respect to said networks, according to the conditions hired by each consumer. However, it is possible that Internet access in households may eventually be interrupted for different reasons, whether external or attributable to the operator itself. Though unusual, incidents of this type compromise the final satisfaction of the users with respect to the service offered by the operator.

In this context, several works have been developed in order to provide proposals for detecting and solving fails in wireless routers, such us the Chinese patent applications CN 107294789 A and CN 111953534 A. However, in these proposals, the devises connected to the Internet connection network through the wireless router have no access to the Internet during the wireless router's fail.

Moreover, in recent years, various smart devices, such as telephones, tablets, etc., have a type of hybrid connectivity which allows them to be connected to both fixed communication networks by means of Wi-Fi, for example, and mobile communication networks. Likewise, many of these devices can be configured as a Wi-Fi AP to the Internet through a mobile network connection. This allows other devices to have alternative access to the Internet, where the smart device acts as a bridge between the fixed home network and the mobile network. In this way, in the event that access to the home Internet network is interrupted, the smart device can maintain the Internet connection of the rest of the home devices. However, configuring the smart device as an alternative AP for all electronic devices of the home network involves a long time and generally requires a high level of manual intervention by the user. This is due to the fact that the alternative AP has a different identifier in the home network for the mentioned devices compared to the original AP, and this requires establishing, for each device, an authentication procedure with the new AP of the network, which involves providing its SSID (service set identifier) and usually its respective identification password. Furthermore, once the incident in the fixed network is resolved, the home devices must be reconfigured by re-establishing the old SSID and its password.

In the context above, the European patent application EP 2563087 A1 discloses a system, wherein a mobile communication terminal can easily acquire the communication state information of a wireless local area network (WLAN) access point. Said information comprises a setting value required for the connection to said access point. In addition, the communication state information is encoded in a two-dimensional code (such a QR-code). In this regard, the mobile communication terminal comprises a camera configured to read the communication state information comprised in said two-dimensional code.

On the other hand, there are example methods and systems for activating auxiliary AP in the prior art. For instance, the US patent application US 2022/039176 A1 discloses a method and a system that uses the wireless hotspot feature of a mobile device that duplicates the network parameters (such as the SSID and passwords) of another AP to a wireless network, so that the mobile device facilitates the connection for a home device via cellular connection. In another example, the US patent application US 2017/150362 A1 discloses a method and a system for provisioning access points in a network. The system comprises a first AP to the network, a second AP to the network, and one or more client devices. The second AP can broadcast a WLAN using the SSID and the password of the first AP, such that the client devices can connect to said WLAN without intervention from a user of the client devices.

Although different technologies for activating auxiliary APs in home networks are known in the state of the art, it would be desirable to develop new methods and systems which allow remotely managing the collection and transmission of access credentials to fixed communication networks, and at the same time allow automatically configuring the auxiliary AP when an event which prevents the home network from accessing the Internet occurs.

The present invention proposes a method and system intended for solving the preceding problems by means of a novel method and system for activating an auxiliary access point in home communication networks.

### SUMMARY OF THE INVENTION

For the purpose of solving the problems and limitations set forth above, the first object of present invention refers to a method for activating an auxiliary access point in a home communication network in case of an Internet access service interruption. Said home communication network is preferably made up of:
- a fixed Internet connection network;
- a first wireless access point to the fixed Internet connection network, such as a router which allows a Wi-Fi connection, for example;
- one or more home devices wirelessly connected to the Internet by means of said first wireless access point; and
- a mobile device configurable as a second wireless access point to a mobile Internet connection network.

In this context, the first wireless access point is configured with an identifier, for example an SSID-type identifier, but without limitation to other equivalent identifiers, and with a password for accessing the fixed Internet connection network through said first wireless access point, shared by the devices connected to the fixed Internet connection network. Likewise, the fixed Internet connection network and the mobile Internet connection network are managed by one or more telecommunications operators, which can be the same or different for each Internet connection network.

Advantageously, the method comprises the step of detecting, by the one or more telecommunications operators, an interruption of the Internet access service of the fixed Internet connection network. Moreover, the SSID identifier and the password of the first wireless access point to the fixed Internet connection network are obtained by the one or more telecommunications operators, before or after an interruption of access to the fixed Internet connection network occurs. Moreover, when this interruption occurs, the one or more telecommunications operators themself transfer, through the mobile Internet connection network, the SSID identifier and the password of the first wireless access point to the mobile device configurable as a second wireless access point, so that said mobile device is then configured as a second wireless access point to the Internet through the mobile Internet connection network, by assigning thereto the same SSID identifier and the same password as the first wireless access point to the fixed Internet connection network. Then the home devices are wirelessly and automatically connect to the Internet by means of the second wireless access point. In this way, the user of the home network can therefore successfully maintain the Internet connection of all his or her devices in a quick and simple manner when the fixed Internet connection network is affected by an incident or is disconnected.

In a preferred embodiment of the invention, before any possible interruption of the Internet connection services in the fixed Internet connection network, the telecommunications operators are in charge of obtaining and storing the SSID identifier - password pair of the first wireless access point to the fixed Internet connection network in a database configured in remote equipment (for example, a server or an array of servers). This allows the telecommunications operator to manage for the home user, without requiring his or her intervention, the access to the identification credentials of the first wireless access point to the fixed Intent connection network and the configuration thereof in the second wireless access point (mobile device).

Moreover, in another preferred embodiment of the invention, the configuration of the mobile device as second wireless access point to the Internet through the mobile Internet connection network, by assigning thereto the same SSID identifier and the same password as the first wireless access point to the fixed Internet connection network, is performed by the telecommunications operators through a mobile application ("app") installed in the mobile device configurable as a second wireless access point. This software allows the auxiliary access point to be configured in a quick and automatic or semi-automatic manner, preventing the user from having to invest time and effort in configuring the Internet access for each home device.

In another preferred embodiment of the invention, the configuration of the mobile device as the second wireless access point to the Internet through the mobile Internet connection network, by assigning thereto the same SSID identifier and the same password as the first wireless access point to the fixed Internet connection network, is manually performed by a user, through a mobile application installed in the mobile device. In this way, the user directly assigns the identification credentials of the original access point to the second access point, in the event that the operator is not able to provide the mobile device with updated identification credentials for access to the fixed Internet connection network. More preferably, manual assignment through the mobile application of the same SSID identifier and/or the same password as the first wireless access point to the second wireless access point to the Internet, is performed by means of an image file or an optical scan which encodes the SSID identifier and the password of the first wireless access point to the fixed Internet connection network. This allows the user to assign the identification credentials of the original access point in a quicker and simpler manner than by means of manually introducing the different characters making up the SSID and the Internet access password. For this purpose, the user can use the predetermined identification credentials of the router which are typically shown explicitly and/or encoded (e.g., in a QR code) on one of the surfaces of the router, for example on a sticker adhered to said surface.

In another preferred embodiment of the present invention, the telecommunications operators send an electronic notification (for example, by means of an SMS) to the mobile device, informing the occurrence and/or the end of the incident or disconnection in the first wireless access point to the fixed Internet connection network. In this way, the user of the home network is kept informed of the status of his or her Internet connection in said fixed Internet connection network.

In another preferred embodiment of the invention, the method further comprises the step of automatically disconnecting the second wireless access point and automatically re-establishing the connection of the home devices with the first wireless access point to the fixed Internet connection network, so that, once the incident or disconnection of the fixed Internet connection network has ended, the client is prevented from investing time and effort in reconfiguring the Internet connection of each of the home devices.

A second object of present invention refers to a system for activating a second wireless access point in a home communication network, wherein said home network comprises:
- a first wireless access point to a fixed Internet connection network,
- one or more home devices wirelessly connected to the Internet by means of the first wireless access point, and
- a mobile device configurable as a second wireless access point to a mobile Internet connection network,

In this context, the first wireless access point is configured with an SSID identifier and a password for accessing the fixed Internet connection network, which are shared by the home devices connected to the fixed Internet connection network. Moreover, the fixed and mobile Internet connection networks are managed by one or more telecommunications operators. Advantageously, the telecommunications operators, the first wireless access point, the mobile device configurable as a second wireless access point, and the home devices are configured with hardware/software means suitable for the implementation of a method according to the first object of present invention. Preferably, one or more of the telecommunications operators comprise a database storing the SSID identifier - password pair of the first wireless access point.

Finally, another object of present invention refers to software program configured for implementing the steps of a method according to the first object of the present invention in a system according to the second object of the present invention.

Other features and advantages of the invention will be inferred from the detailed description thereof and from the drawings provided in the following sections of the present document.

### DESCRIPTION OF THE FIGURES

Figure 1 shows the elements making up the home communication network in a preferred embodiment of the present invention.
Figure 2 schematically shows the steps comprised in the proposed method in a preferred embodiment of the present invention.

### REFERENCE NUMBERS USED IN THE FIGURES

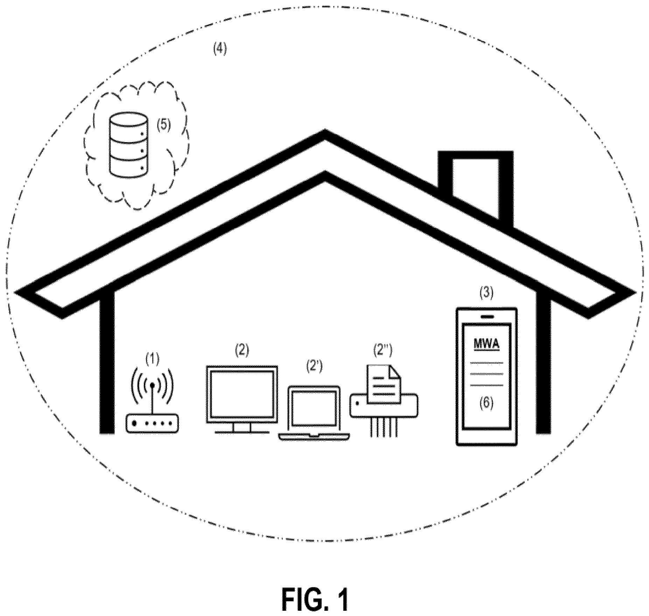

In order to help to better understand the essential technical features of the invention, a series of reference numbers in which the following elements are depicted in an illustrative and non-limiting character is provided in the mentioned Figures 1-2:

| | |
|---|---|
| (1) | First wireless access point (AP), Wi-Fi router |
| (2, 2', 2") | Home devices |
| (3) | Second wireless access point (AP), mobile device |
| (4) | Telecommunications operator |
| (5) | Telecommunications operator database |
| (6) | Mobile application |

### DETAILED DESCRIPTION OF THE INVENTION

A preferred embodiment of the present invention, provided for illustrative but non-limiting purposes, is described below.

As mentioned in the preceding sections, the objective of the present invention is a system and method for the automated or semi-automated activation of Wi-Fi type auxiliary access points when the Internet access service of a fixed Internet connection network is interrupted either due to an incident in said network or to a particular incident in the place or the surroundings in which said network is located. In this context and as depicted in Figure 1, a home communication network is preferably made up of:
- a first wireless AP (1) to a fixed Internet connection network, such as a router which allows a Wi-Fi connection, for example;
- one or more home devices (2, 2', 2") wirelessly connected to the fixed Internet connection network by means of said first wireless AP; and
- a second wireless AP (3), preferably comprising a mobile type device, connected to a mobile Internet connection network.

In the mentioned home communication network, the invention propose a method which allows the user to configure, in a quick and simple manner, a mobile device as the second wireless AP (3) which works alternatively to the first wireless AP (1), which is connected to the mobile Internet connection network managed by a telecommunications operator (4). Optionally, the telecommunications operator (4) can also manage the Internet access of the fixed Internet connection network, although in other embodiments the operators (4) can be different. Preferably, the operator (4) which manages the fixed Internet connection network will have a remote database (5) configured with information identifying the first wireless AP (1) (for example, through its SSID) and the password for accessing same.

In a preferred embodiment of the invention, the activation of the second wireless AP (3) is performed through a mobile application (6), preferably installed in the mobile device acting as the second wireless AP (3).

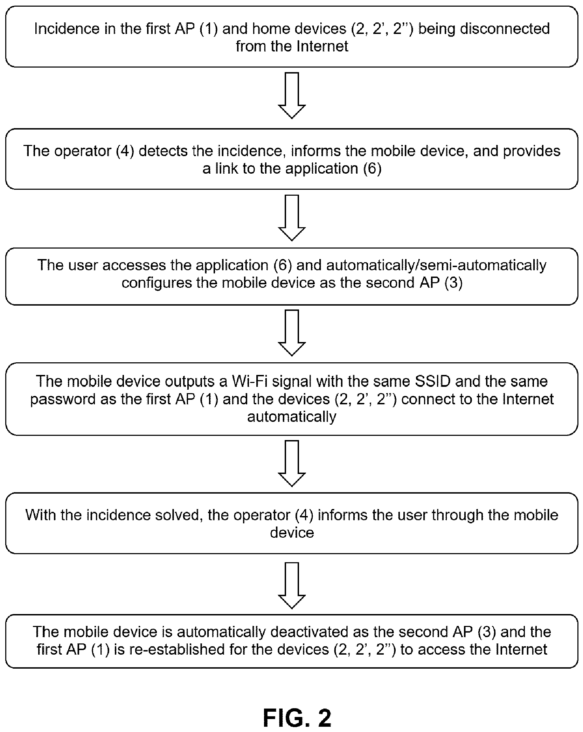

Figure 2 shows the main steps comprised in the method of the invention. Occasionally, an internal or external incident interrupts the Wi-Fi connection of the first wireless AP (1) (for example, a home router) in a fixed Internet connection network. This is when the telecommunications operator (4) detects this interruption (either automatically or through notifications) and identifies the users affected by the interruption. Once identified, the operator can inform the users of the incident, for example, through SMS messaging or equivalent means, providing them at the same time a link to the mobile application (6), as well as, optionally, information for use thereof.

There are different implementation scenarios of the proposed method due to different factors, such as the particular operating system (OS) of the mobile device (second wireless AP(3)) of the user of the mobile Internet connection network, or the presence or absence of an up-to-date record of the Internet access credentials (i.e., the SSID identifier and/or the password for accessing the first wireless AP (1)) of the fixed Internet connection network in the database (5) of the operator (4). However, in all these scenarios, the final result is that the client's mobile device (second wireless AP(3)) will emit a Wi-Fi signal associated with the same SSID and Internet access password as the first wireless AP (1) to the fixed Internet connection network, i.e., the identification credentials shared by each of the home devices (2, 2', 2"). Preferably, once the incident causing the disconnection of the first wireless AP (1) from the fixed Internet connection network has been solved, the operator informs the client of the end of the incident. Likewise, the mobile device is automatically deactivated as the second wireless AP (3) and the first wireless AP (1) for the Internet access of the home devices (2, 2', 2") is automatically reestablished.

As mentioned above, different casuistries may occur depending on the capacity of the OS of the mobile device (second wireless AP (3)) to allow external configuration of the Internet access credentials, and on the prior storage of the SSID-password pair in the database (5) of the telecommunications operator (4). In a first preferred embodiment of the invention, the OS of the mobile device (second wireless AP (3)) allows external configuration of the SSID identifier and password for Wi-Fi connection, and at the same time, these fixed network Internet access credentials are recorded in the database (5) of the telecommunications operator (4). In this case, the mobile application (6) has maximum functionality. Preferably, the client will receive the notification of the incident in his or her access point (1) to the fixed Internet connection network and, through the link provided therein, he or she will access the application (6) where he or she will be able to accept the required disclaimers and see the SSID and access password fields filled in with the identification credentials of the AP (1) affected by the incident. Likewise, the user will also see an activation button which will allow him or her to transparently establish his or her mobile device as the second wireless AP (3) for the rest of the devices in the home communication network (2, 2', 2").

In a second preferred embodiment of the invention, the operating system of the mobile device (second wireless AP(3)) allows externally configuring the SSID identifier and password for Wi-Fi connection, but the password of the first wireless AP (1) to the Internet of the fixed Internet connection network is not recorded in the database (5) of the telecommunications operator (4). Preferably, the client will be informed of the incident in his or her first home Wi-Fi access point (1) and, through the link provided thereto in the notification, the client will access the mobile application (6) in which, after accepting the disclaimers, he or she will see that the SSID identifier field is filled in with the SSID identifier of the AP (1) affected by the incident, whereas the password field is empty and can be edited. In a preferred embodiment of the invention, in the event that the user has not changed the predetermined password of the router (first wireless AP(1)), the client will be able to provide the password to the mobile application (6) by means of an image file or an optical scan obtained, for example, from the home router (first wireless AP(1)). Once the user has provided the password, he or she will be able to proceed with activation which enables the mobile device as the second wireless AP (3) for the other home devices (2, 2', 2") to access the Internet.

In a third preferred embodiment of the invention, the OS of the mobile device (second wireless AP (3)) does not allow external configuration of the SSID identifier or its respective password for Wi-Fi connection, but said credentials of the fixed Internet connection network are collected in the database (5) of the operator (4). In this embodiment, the client will be informed about the incident on his or her home Wi-Fi (1) and he or her will access the application (6), for example, by means of the link provided to him or her. Once inside the application (6) and after accepting the required disclaimers, the client will notice that the SSID and password fields are filled in with the identification credentials of the AP (1) affected by the incident, and he or she will see the option to copy next to each field. At the same time, the client will be able to see that he or she is given the option to access a guide with instructions on how to manually configure his or her mobile device as an alternative second wireless AP (3) for the rest of the home devices (2, 2', 2") using the preceding identification credentials. Moreover, the client will also see a button that will take him or her to the settings of the mobile device (second wireless AP (3)) to execute the procedure described in the instructions.

Finally, in a fourth preferred embodiment of the invention, neither the operating system allows externally configuring Wi-Fi access credentials, nor the database (5) of the telecommunications operator (6) collects the access password to the home router (first wireless AP (1)). In this case, once the user has accessed the application (6), for example through the link provided in the notification of the incident sent by the operator (4), and after accepting the corresponding disclaimers, he/she will see that the SSI D identifier field is filled in with the SSID identifier of the AP (1) affected by the incident, while the password field is empty and can be edited. In a preferred embodiment of the invention and if the client had not changed the predetermined password for access to the Wi-Fi of the home router (first wireless AP (1)), the user will be able to provide the password to the mobile application (6) by means of an image file or an optical scan obtained, for example, from said first wireless AP (1) with the incident. Once the client has provided the password, he or she will be able to see that the SSID and password fields are filled in and that there is an option to copy next to each field. Likewise, he or she will also see that he or she is given the option to access instructions that will allow him or her to manually configure his or her mobile device (second wireless AP (3)) as an alternative access point for the other home devices (2, 2', 2"). In addition, the client will also notice the presence of a button for direct access to the settings of the mobile phone (3), where he or she will be able to implement said instructions.

## Claims

1. A method for activating auxiliary access points in a home communication network in case of an Internet access service interruption;
wherein said communication network comprises:
- a fixed Internet connection network;
- a first wireless access point (1) to the fixed Internet connection network;
- one or more home devices (2, 2', 2") wirelessly connected to the Internet by means of the first wireless access point (1);
- a mobile device configurable as a second wireless access point (3) to a mobile Internet connection network;
wherein the first wireless access point (1) is configured with an SSID identifier and a password for accessing the fixed Internet connection network, which are shared by the home devices (2, 2', 2") connected to the fixed Internet connection network;
and wherein the fixed and mobile Internet connection networks are managed by at least one telecommunications operator (4);
**characterized in that** the method comprises performing the following steps:
- automatically detecting, by the telecommunications operator (4), an interruption of the Internet access service of the fixed Internet connection network;
- obtaining, by the telecommunications operator (4), the SSID identifier and the password of the first wireless access point (1) to the fixed Internet connection network;
- transferring through the mobile Internet connection network, by the telecommunications operator (4), the SSID identifier and the password of the first wireless access point (1) to the mobile device configurable as a second wireless access point (3);
- configuring the mobile device as second wireless access point (3) to the Internet through the mobile Internet connection network, by assigning thereto the same SSID identifier and the same password as the first wireless access point (1) to the fixed Internet connection network;
- connecting the home devices (2, 2', 2") wirelessly and automatically to the Internet, by means of the second wireless access point (3).

2. The method according to the preceding claim, which comprises storing the SSID identifier - password pair of the first wireless access point (1) to the fixed Internet connection network in a database (5) of the telecommunications operator (4).

3. The method according to any of the preceding claims, wherein the step of configuring the mobile device as second wireless access point (3) to the Internet through the mobile Internet connection network, by assigning thereto the same SSID identifier and the same password as the first wireless access point (1) to the fixed Internet connection network, is performed by the telecommunications operator (4), through a mobile application (6) installed in the mobile device.

4. The method according to claims 1-2, wherein the step of configuring the mobile device as second wireless access point (3) to the Internet through the mobile Internet connection network, by assigning thereto the same SSID identifier and the same password as the first wireless access point (1) to the fixed Internet connection network, is manually performed by a user, through a mobile application (6) installed in the mobile device.

5. The method according to the preceding claim, wherein manual assignment through the mobile application (6) is performed by means of an image file or an optical scan which encodes the SSID identifier and the password of the first wireless access point (1) to the fixed Internet connection network.

6. The method according to any of the preceding claims, which comprises the telecommunications operator (4) sending an electronic notification to the mobile device (3), informing the occurrence and/or the end of the incident or disconnection in the first wireless access point (1) to the fixed Internet connection network.

7. The method according to any of the preceding claims, comprising the step of automatically disconnecting the second wireless access point (3) and automatically re-establishing the connection of the home devices (2, 2', 2") with the first wireless access point (1) to the fixed Internet connection network.

8. A system for activating a second wireless access point (3) in a home communication network;
wherein said home network comprises:
- a first wireless access point (1) to a fixed Internet connection network;
- one or more home devices (2, 2', 2") wirelessly connected to the Internet by means of the first wireless access point (1);
- a mobile device configurable as a second wireless access point (3) to a mobile Internet connection network;
wherein the first wireless access point (1) is configured with an SSID identifier and a password for accessing the fixed Internet connection network, which are shared by the home devices (2, 2', 2") connected to the fixed Internet connection network;
and wherein the fixed and mobile Internet connection networks are managed by at least one telecommunications operator (4);
**characterized in that** the telecommunications operator (4), the first wireless access point (1), the mobile device configurable as a second wireless access point (3), and the home devices (2, 2', 2") are configured with hardware/software means suitable for the implementation of a method according to any of claims 1-7.

9. The system according to the preceding claim, wherein the telecommunications operator (4) comprise a database (5) storing the SSID identifier - password pair of the first wireless access point (1).

10. A software program (6) comprising instructions to cause the system according to any of claims 8-9 to execute all the steps of the method according to any of claims 1-7.

## Patentansprüche

1. Verfahren zum Aktivieren von Hilfszugangspunkten in einem Heimkommunikationsnetzwerk im Falle einer Unterbrechung des Internetzugangsdienstes;
wobei das Kommunikationsnetzwerk Folgendes umfasst:
- ein festes Internetverbindungsnetzwerk;
- einen ersten drahtlosen Zugangspunkt (1) zum festen Internetverbindungsnetzwerk-,
- eine oder mehrere Heimvorrichtungen (2, 2', 2"), die mittels des ersten drahtlosen Zugangspunkts (1) drahtlos mit dem Internet verbunden sind;
- eine mobile Vorrichtung, die als zweiter drahtloser Zugangspunkt (3) zu einem mobilen Internetverbindungsnetzwerk konfiguriert werden kann;
wobei der erste drahtlose Zugangspunkt (1) mit einem SSID-Bezeichner und einem Passwort für den Zugang zum festen Internetverbindungsnetzwerk konfiguriert ist, die von den mit dem festen Internetverbindungsnetzwerk verbundenen Heimvorrichtungen (2, 2', 2") gemeinsam genutzt werden;
und wobei die festen und mobilen Internetverbindungsnetzwerke von mindestens einem Telekommunikationsbetreiber (4) verwaltet werden;
**dadurch gekennzeichnet, dass** das Verfahren das Durchführen der folgenden Schritte umfasst:
- automatisches Erkennen einer Unterbrechung des Internetzugangsdienstes des festen Internetverbindungsnetzwerkes durch den Telekommunikationsbetreiber (4);
- Erlangen des SSID-Bezeichners und des Passworts des ersten drahtlosen Zugangspunkts (1) zum festen Internetverbindungsnetzwerk durch den Telekommunikationsbetreiber (4);
- Übertragen des SSID-Bezeichners und des Passworts des ersten drahtlosen Zugangspunkts (1) durch den Telekommunikationsbetreiber (4) über das mobile Internetverbindungsnetzwerk an die mobile Vorrichtung, die als zweiter drahtloser Zugangspunkt (3) konfiguriert werden kann;
- Konfigurieren der mobilen Vorrichtung als zweiter drahtloser Zugangspunkt (3) zum Internet über das mobile Internetverbindungsnetzwerk, indem diesem derselbe SSID-Bezeichner und dasselbe Passwort wie dem ersten drahtlosen Zugangspunkt (1) zum festen Internetverbindungsnetzwerk zugewiesen werden;
- Verbinden der Heimvorrichtungen (2, 2', 2") drahtlos und automatisch mit dem Internet mittels des zweiten drahtlosen Zugangspunkts (3).

2. Verfahren nach dem vorhergehenden Anspruch, das das Speichern des Paars SSID-Bezeichner-Passwort des ersten drahtlosen Zugangspunkts (1) zum festen Internetverbindungsnetzwerk in einer Datenbank (5) des Telekommunikationsbetreibers (4) umfasst.

3. Verfahren nach einem der vorhergehenden Ansprüche, wobei der Schritt des Konfigurierens der mobilen Vorrichtung als zweiter drahtloser Zugangspunkt (3) zum Internet über das mobile Internetverbindungsnetzwerk, indem diesem derselbe SSID-Bezeichner und dasselbe Passwort wie dem ersten drahtlosen Zugangspunkt (1) zum festen Internetverbindungsnetzwerk zugewiesen werden, durch den Telekommunikationsbetreiber (4) über eine in der mobilen Vorrichtung installierte mobile Anwendung (6) durchgeführt wird.

4. Verfahren nach Anspruch 1-2, wobei der Schritt des Konfigurierens der mobilen Vorrichtung als zweiter drahtloser Zugangspunkt (3) zum Internet über das mobile Internetverbindungsnetzwerk, indem diesem derselbe SSID-Bezeichner und dasselbe Passwort wie dem ersten drahtlosen Zugangspunkt (1) zum festen Internetverbindungsnetzwerk zugewiesen werden, manuell von einem Benutzer über eine in der mobilen Vorrichtung installierte mobile Anwendung (6) durchgeführt wird.

5. Verfahren nach dem vorhergehenden Anspruch, wobei die manuelle Zuweisung durch die mobile Anwendung (6) mittels einer Bilddatei oder eines optischen Scans durchgeführt wird, der den SSID-Bezeichner und das Passwort des ersten drahtlosen Zugangspunkts (1) zum festen Internetverbindungsnetzwerk codiert.

6. Verfahren nach einem der vorhergehenden Ansprüche, das umfasst, dass der Telekommunikationsbetreiber (4) eine elektronische Benachrichtigung an die mobile Vorrichtung (3) sendet, wobei über das Auftreten und/oder das Ende des Vorfalls oder der Trennung in dem ersten drahtlosen Zugangspunkt (1) zum festen Internetverbindungsnetzwerk informiert wird.

7. Verfahren nach einem der vorhergehenden Ansprüche, umfassend den Schritt des automatischen Trennens des zweiten drahtlosen Zugangspunkts (3) und des automatischen Wiederherstellens der Verbindung der Heimvorrichtungen (2, 2', 2") mit dem ersten drahtlosen Zugangspunkt (1) zu dem festen Internetverbindungsnetzwerk.

8. System zum Aktivieren eines zweiten drahtlosen Zugangspunkts (3) in einem Heimkommunikationsnetzwerk;
wobei das Heimnetzwerk Folgendes umfasst:
- einen ersten drahtlosen Zugangspunkt (1) zu einem festen Internetverbindungsnetzwerk;
- eine oder mehrere Heimvorrichtungen (2, 2', 2"), die mittels des ersten drahtlosen Zugangspunkts (1) drahtlos mit dem Internet verbunden sind;
- eine mobile Vorrichtung, die als zweiter drahtloser Zugangspunkt (3) zu einem mobilen Internetverbindungsnetzwerk konfiguriert werden kann;
wobei der erste drahtlose Zugangspunkt (1) mit einem SSID-Bezeichner und einem Passwort für den Zugang zum festen Internetverbindungsnetzwerk konfiguriert ist, die von den mit dem festen Internetverbindungsnetzwerk verbundenen Heimvorrichtungen (2, 2', 2") gemeinsam genutzt werden;
und wobei die festen und mobilen Internetverbindungsnetzwerke von mindestens einem Telekommunikationsbetreiber (4) verwaltet werden;
**dadurch gekennzeichnet, dass** der Telekommunikationsbetreiber (4), der erste drahtlose Zugangspunkt (1), die mobile Vorrichtung, die als zweiter drahtloser Zugangspunkt (3) konfiguriert werden kann, und die Heimvorrichtungen (2, 2', 2") mit Hardware-/Software-Mitteln konfiguriert sind, die für die Implementierung eines Verfahrens nach einem der Ansprüche 1-7 geeignet sind.

9. System nach dem vorhergehenden Anspruch, wobei der Telekommunikationsbetreiber (4) eine Datenbank (5) umfasst, die das Paar SSID-Bezeichner-Passwort des ersten drahtlosen Zugangspunkts (1) speichert.

10. Softwareprogramm (6), umfassend Anweisungen, um das System nach einem der Ansprüche 8-9 zu veranlassen, alle Schritte des Verfahrens nach einem der Ansprüche 1-7 auszuführen.

## Revendications

1. Procédé d'activation de points d'accès auxiliaires dans un réseau de communication domestique en cas d'interruption du service d'accès à Internet ;
dans lequel ledit réseau de communication comprend :
- un réseau de connexion fixe à Internet ;
- un premier point d'accès sans fil (1) au réseau de connexion fixe à Internet ;
- un ou plusieurs dispositifs domestiques (2, 2', 2") connectés sans fil à Internet au moyen du premier point d'accès sans fil (1) ;
- un dispositif mobile qui peut être configuré en tant que second point d'accès sans fil (3) à un réseau de connexion mobile à Internet ;
dans lequel le premier point d'accès sans fil (1) est configuré avec un identifiant SSID et un mot de passe pour accéder au réseau de connexion fixe à Internet, qui sont partagées par les dispositifs domestiques (2, 2', 2") connectés au réseau de connexion fixe à Internet ;
et dans lequel les réseaux de connexion fixe et mobile à Internet sont gérés par au moins un opérateur de télécommunications (4) ;
**caractérisé en ce que** le procédé comprend la mise en oeuvre des étapes suivantes :
- la détection automatique, par l'opérateur de télécommunications (4), d'une interruption du service d'accès à Internet du réseau de connexion fixe à Internet ;
- l'obtention, par l'opérateur de télécommunications (4), de l'identifiant SSID et du mot de passe du premier point d'accès sans fil (1) au réseau de connexion fixe à Internet ;
- le transfert à travers le réseau de connexion mobile à Internet, par l'opérateur de télécommunications (4), de l'identifiant SSID et du mot de passe du premier point d'accès sans fil (1) au dispositif mobile qui peut être configuré comme en tant que second point d'accès sans fil (3) ;
- la configuration du dispositif mobile en tant que second point d'accès sans fil (3) à Internet à travers le réseau de connexion mobile à Internet, en lui attribuant le même identifiant SSID et le même mot de passe qu'au premier point d'accès sans fil (1) au réseau de connexion fixe à Internet ;
- la connexion des dispositifs domestiques (2, 2', 2") sans fil et automatiquement à Internet, au moyen du second point d'accès sans fil (3).

2. Procédé selon la revendication précédente, qui comprend le stockage de la paire identifiant SSID - mot de passe du premier point d'accès sans fil (1) au réseau de connexion fixe à Internet dans une base de données (5) de l'opérateur de télécommunications (4).

3. Procédé selon l'une quelconque des revendications précédentes, dans lequel l'étape consistant à configurer le dispositif mobile en tant que second point d'accès sans fil (3) à Internet à travers le réseau de connexion mobile à Internet, en lui attribuant le même identifiant SSID et le même mot de passe qu'au premier point d'accès sans fil (1) au réseau de connexion fixe à Internet, est effectuée par l'opérateur de télécommunications (4), à travers une application mobile (6) installée sur le dispositif mobile.

4. Procédé selon les revendications 1-2, dans lequel l'étape consistant à configurer le dispositif mobile en tant que second point d'accès sans fil (3) à Internet à travers le réseau de connexion mobile à Internet, en lui attribuant le même identifiant SSID et le même mot de passe qu'au premier point d'accès sans fil (1) au réseau de connexion fixe à Internet, est effectuée manuellement par un utilisateur, à travers une application mobile (6) installée sur le dispositif mobile.

5. Procédé selon la revendication précédente, dans lequel l'attribution manuelle à travers l'application mobile (6) est effectuée au moyen d'un fichier image ou d'un balayage optique qui encode l'identifiant SSID et le mot de passe du premier point d'accès sans fil (1) au réseau de connexion fixe à Internet.

6. Procédé selon l'une quelconque des revendications précédentes, qui comprend l'envoi par l'opérateur de télécommunications (4) d'une notification électronique à l'appareil mobile (3), informant de la survenue et/ou de la fin de l'incident ou de la déconnexion du premier point d'accès sans fil (1) au réseau de connexion fixe à Internet.

7. Procédé selon l'une quelconque des revendications précédentes, comprenant l'étape de déconnexion automatique du second point d'accès sans fil (3) et de rétablissement automatique de la connexion des dispositifs domestiques (2, 2', 2") avec le premier point d'accès sans fil (1) au réseau de connexion fixe à Internet.

8. Système d'activation d'un second point d'accès sans fil (3) dans un réseau de communication domestique ;
dans lequel ledit réseau domestique comprend :
- un premier point d'accès sans fil (1) à un réseau de connexion fixe à Internet ;
- un ou plusieurs dispositifs domestiques (2, 2', 2") connectés sans fil à Internet au moyen du premier point d'accès sans fil (1) ;
- un dispositif mobile qui peut être configuré en tant que second point d'accès sans fil (3) à un réseau de connexion mobile à Internet ;
dans lequel le premier point d'accès sans fil (1) est configuré avec un identifiant SSID et un mot de passe pour accéder au réseau de connexion fixe à Internet, qui sont partagées par les dispositifs domestiques (2, 2', 2") connectés au réseau de connexion fixe à Internet ;
et dans lequel les réseaux de connexion fixe et mobile à Internet sont gérés par au moins un opérateur de télécommunications (4) ;
**caractérisé en ce que** l'opérateur de télécommunications (4), le premier point d'accès sans fil (1), le dispositif mobile qui peut être configuré en tant que second point d'accès sans fil (3) et les dispositifs domestiques (2, 2', 2") sont configurés avec des moyens matériels/logiciels aptes pour la mise en oeuvre d'un procédé selon l'une des revendications 1 à 7.

9. Système selon la revendication précédente, dans lequel l'opérateur de télécommunications (4) comprend une base de données (5) qui stocke la paire identifiant SSID - mot de passe du premier point d'accès sans fil (1).

10. Programme logiciel (6) comprenant des instructions qui amènent le système selon l'une quelconque des revendications 8-9 à exécuter toutes les étapes du procédé selon l'une quelconque des revendications 1-7.
